(19) Europäisches Patentamt
European Patent Office
Office européen des brevets

(11) EP 3 854 580 A1

(12) EUROPEAN PATENT APPLICATION
published in accordance with Art. 153(4) EPC

(43) Date of publication:
28.07.2021 Bulletin 2021/30

(51) Int Cl.:
B32B 5/26 (2006.01)      B32B 5/22 (2006.01)
D03D 11/00 (2006.01)     D03D 15/00 (2021.01)
D01D 5/253 (2006.01)

(21) Application number: 18934235.5

(22) Date of filing: 14.12.2018

(86) International application number:
PCT/CN2018/121257

(87) International publication number:
WO 2020/056949 (26.03.2020 Gazette 2020/13)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 18.09.2018  CN 201811089055

(71) Applicant: Best Pacific Textile Ltd.
Dongguan, Guangdong 523147 (CN)

(72) Inventors:
• HU, Junyan
  Dongguan, Guangdong 523147 (CN)
• WANG, Yong
  Dongguan, Guangdong 523147 (CN)
• YANG, Congxu
  Dongguan, Guangdong 523147 (CN)

(74) Representative: Jacobi, Markus Alexander
Patentanwälte
Isenbruck Bösl Hörschler PartG mbB
Eastsite One
Seckenheimer Landstrasse 4
68163 Mannheim (DE)

(54) **METHOD OF DESIGNING FABRIC HAVING DIFFERENT LIQUID PERMEABILITIES BY CALCULATING FABRIC CAPILLARY LIQUID PERMEABILITY**

(57) The present invention relates to a method for designing a functional fabric with differential surface moisture transfer behaviors based on calculation of unit area capillary liquid transportation capacity (LP) at fabric two surfaces respectively. The designed method comprises (1) Identify wettability of the yarn which will be used for fabric out and inner surface individually before fabric structure design; and the contact angle of the yarn which is used for fabric out surface is required to be less than or equal to the one of inner surface yarn. Preferably, the contact angle of the out surface yarn is less than 10° of the one of inner surface yarn; (2) an equation for estimating the total amount of capillaries of a yarn is developed and the liquid transfer behavior of the yarns is calculated accordingly. And the criteria for selecting the out and inner surface yarn is also disclosed in this invention; (3) based on the developed equations, the single yarn's liquid transfer capacity is estimated (4) combined with the structural design of a fabric, the cover ration of top and/or inner surface yarn at fabric two surfaces can be calculated and the result is used to derive the capillary liquid transportation capacity (LP). The invention required that LPu>LPb, preferably LPu>1.3LPb. The designed fabric can achieve an effective differential liquid transportation at fabric two surfaces. The moisture content at the fabric out surface will be higher than it at fabric inner surface.

FIG. 1

**Description**

**FIELD OF THE INVENTION**

The invention relates to the field of textile technology, in particular to a fabric design method which is based on the measurement and selection of the fabric yarn according to its wetting characteristics or contact angle, and further based on the calculation of capillary water conductivity of the yarn, the inner surface and the outer surface of the fabric according to the capillary water transport theory as applied to fabric fibers. As the design criterion, it is required that the ratio of the calculated capillary water conductivity between the outer surface and the inner surface be at least 1.3, more preferably greater than 2.0 in order to achieve the design goal of producing a fabric with two surfaces having significant differential water-conducting properties.

**BACKGROUND OF THE INVENTION**

Differential moisture-conducting fabric is a fabric with different moisture-conducting capabilities on the outer surface and inner surfaces of the fabric, so that the liquid water (sweat) in the fabric can be more easily transported from the weaker moisture-conducting side to the stronger moisture-conducting side of the fabric. Thus, in the normal wearing process, especially when sweating during exercise, the sweat can be quickly discharged from the skin to give a dry and comfortable feeling. However, in other circumstances, such as for people having a dry skin condition, particularly during the winder time, if the inner side of the cloth has a higher moisture conductivity than the outer surface of the cloth, it may achieve the effect of retaining moisture to comfort the dry skin.

There have been many prior inventions in design and preparation of fabrics with differential moisture permeability. The evaluation and measurement of moisture permeability of fabrics can be based on the standard AATCC 195 ("Liquid Moisture Management Properties of Textile Fabrics") or GB/T 21655.2 ("Assessment of moisture absorption and quick drying of textiles, Part 2: Dynamic moisture transfer method"). The differential moisture conductivity of the fabric can be represented by the one-way transportation index. Usually, when the one-way transportation index (O) is higher than level 3 or > 100, it is considered to have significant differential water conductivity (GB/T 21655.2). It has been found that fabrics with differential water-conducting properties can effectively improve the wearer's comfort during exercise and delay the occurrence of physiological fatigue. Through a search of related patents, several prior patents in related subjects were found, which are summarized below:

1. Designs focused on fabric structure to achieve moisture absorption and quick-drying function or to add functional yarn or finishing to the design of moisture-absorbing and quick-drying fabric to achieve additional functions, for example:

-- Patent application CN 105725319 A, entitled "A moisture-absorbing and quick-drying knitted denim shirt fabric", discloses a denim shirt fabric made from modified polyester staple fiber "Porel" which has waist-shape inner cavity structure and is a moisture-absorbing and quick-drying fiber, forming cotton and spandex yarns. The fabric has advantages of good moisture absorption and quick drying, soft and light hand feeling, and the visual appearance resembles very much the woven denim fabric, and the fabric elasticity is superior to that of the woven denim fabric.

-- Patent application CN 106283368 A, entitled "The production process of an antibacterial, deodorant, moisture-absorbing and quick-drying knitted fabric", discloses that nano-scale silver-based antibacterial materials is used to provide good antibacterial and deodorizing functions, and also improved grooved fiber with cross-sections are used to to bring significant moisture absorption and quick drying effects. The pure silver component in the fiber can kill various common germs harmful to the human body and remove sweat odor in a short time.

-- Patent CN 205741455 U , entitled "A moisture-absorbing and quick-drying moisture-absorbing and exothermic fabric", discloses a fabric which includes: a front layer and a back layer, the front layer is a nylon-polyester blended yarn covering the spandex, and the back layer is a hygroscopic and heat-emitting polyester yarn. The hygroscopic heat-emitting polyester yarn and the front layer yarn are connected by tucking stitch, and have a 1:2 twill structure. The surface of the front layer and the back layer is coated with a moisture absorption and quick-drying auxiliary agent, achieving moisture absorption, heat generation, moisture permeability and quick-drying functions;

-- Patent application CN 105088802 A, entitled "A moisture-absorbing and quick-drying finishing process for yarn-dyed fabrics", related to a process which provides a moisture-absorbing and quick-drying finishing process for yarn-dyed fabrics. The dry finishing agent is composed of a surfactant and a polyether amino modified silicone oil. The pressing and curing process is then applied. The horizontal wicking and diffusivity of the finished fabric are improved by 260%, with good moisture permeability, feel and elasticity.

-- Patent application CN 103276601 A, entitled "A dyeing and finishing process for hygroscopic and quick-drying fabrics", using a process comprising grey fabric presetting → degreasing and presizing → dyeing → reduction cleaning → microfibre finishing → quick-drying finishing → setting, which not only can retain the moisture absorption and sweat wicking functions of the fabric, but can it also keep the quick-drying function, thus meeting the the fabric's moisture absorption and quick-drying requirements.

2. Designs based on the use of different mixing and matching of yarns to achieve differential transferring abilities of liquid water on the two sides of the fabric.

-- Patent application CN201710717764.6, entitled "A moisture-conducting and quick-drying weft-knitted fabric and its processing technology", provides a moisture-conducting and quick-drying weft-knitted fabric composed of at least two yarns with different DPF wefts. The design of the float length of two different DPF yarns on the two sides of the fabric achieves the difference in moisture permeability of the two sides of the fabric.

-- Patent application CN 106012538 A, entitled "Manufacturing method of moisture-absorbing and quick-drying and one way transfer double-layer fabric" , discloses that a double-layer fabric grey fabric was made by using cationic polyester yarn and polyester filament yarn, and then the modified refining agent LS01 was applied on this fabric and finally obtain moisture one way transfer fabric.

-- CN1985036A, entitled "Woven fabric with moisture management properties" discloses that a woven fabric consists of a uniform woven structure with hydrophobic and hydrophilic yarns, having hydrophobic and hydrophilic materials exposed on the inner and outer surfaces, respectively. Thereby, the one-way transmission of sweat from the fabric inner surface to the outer surface is realized.

-- CN207044828U, entitled "One way moisture transferring fabric", is related to a fabric interwoven with water-repellent raw cotton yarn and hydrophilic cotton yarn, and the yarn count of the hydrophilic cotton yarn at fabric's outer surface is larger than the one of the raw cotton yarn at the inner surface. It achieves a fabric moisture one-way transfer, without using any chemicals.

-- CN206033999U, entitled "One-way moisture transferring and heat-generating knitted fabric", discloses that combining and matching different yarns makes the fabric have the function of one-way moisture and also realize the function of moisture absorption and heat generation.

In light of the existing patents in related fields, it is understood that although there are many existing patented technologies for producing fabrics the two sides of which have differential moisture permeability, and the technical implementation schemes can be classified into two categories. The first category is the treatment of the existing fabric surface through different finishing processes, so as to achieve the differential water conductivity of the two sides of the fabric. However, such methods generally have low washing fastness of the additives. Usually, the function will decrease or even disappear after a certain number of washings. At the same time, the material properties and structure of the treated fabric will also influence the treatment effect. The second category is the use of hydrophobic yarns and hydrophilic yarns to achieve this function by placing the hydrophilic and hydrophobic yarns at different positions on the structure of the fabric at the two sides of the fabric. However, the existing technology has not disclosed that the structure of the yarn itself has significant influence on the hydrophilic and hydrophobic properties of the yarn and on its ability to conduct water, thereby affecting the differential moisture permeability of the fabric. The wettability of the material surface is an important factor that affects the differential moisture conductivity of fabrics, but it is not the only factor. For example, there are also patented technologies that are based on DPF values of different yarns for fabric design, possibly to achieve differential moisture transfer of the fabric, but the effect of this technology on the solid-liquid contact angle of the material has not been further discussed and studied. It is well known in the industry that yarns of different materials have different contact angles. For example, the contact angle of viscose filaments is about 27 °; polyester is about 65 °; nylon is about 40-62 °.

Therefore, in order to overcome the shortcomings of the prior art in the design of differential liquid transportation fabrics, the present invention provides a quantitative method to design such functional fabric, which comprises calculating the capillary liquid transportation capacity and then, according to the calculated results, selecting yarns and structure designs in order to realize the function of

## SUMMARY OF THE INVENTION

In view of the shortcomings in the prior art noted above, the object of the present invention is to provide a quantitative design method by relying on measuring and calculating the capillary water-transporting capacity of the yarns, and designing the fabric structure to achieve the differential water-transporting capacity of the two sides of the fabric.

Before introducing the specific content of this invention, some theoretical basic knowledge related to this invention will be introduced first.

There are three main types of wet transmission channels for human skin sweating through clothing (fabrics) to the environment: The first type is the evaporation of sweat into water vapor in the microclimate zone, and the gaseous water passes through the gaps between the yarns and fibers in the fabric, migrating to the environment via diffusion.The second type is that after sweat evaporates into water vapor in the microclimate zone, gaseous water condenses into fiber holes on the inner surface of the fabric and the surface of the fiber to form liquid water, which is then transported to the outer surface of the fabric through the inner holes or inter-fiber gaps of the fiber. From the outer surface, the liquid water then re-evaporated into water vapor and diffused to the environment. The third type is that sweat enters the inner surface of the fabric in the form of liquid water through direct contact, and is transported to the outer surface of the fabric through the pores and holes between the yarns and fibers in the fabric and from the outer surface, it re-evaporates into water vapor, diffusing and migrating to the environment (Yao Mu et al., "Theoretical and Practical Research on Wet Conduction of Fabrics", Journal of Northwest Textile Institute of Technology, Vol. 15, No. 2 (Overall No. 55)). Therefore, keeping the inner surface of the fabric dry and discharging the sweating as much as possible to the outer surface of the fabric has great significance for the comfort of wearers, particularly during physical exercises. In the interface system of air, water and solid, an important index that affects water transfer characteristics is the contact angle.

The contact angle refers to the angle θ which is between the tangential lines of the gas-liquid interface and the solid-liquid boundary line at the intersection of gas, liquid and solid, which is a measurement of the degree of wettability. If θ <90°, the solid surface is hydrophilic, that is, the liquid is easier to wet the solid. The smaller the angle, the better the wettability. If θ> 90°, the solid surface is hydrophobic, that is, the liquid does not easily wet the solid but more easily moves on the surface. After a drop of liquid falls on a horizontal solid surface and equilibrium is reached, the relationship between the contact angle formed and the interfacial tension conforms to the following Young Equation (Young Equation, see http://www.baike.com/wiki/contact angle) .

$$\cos\theta = \frac{\gamma^s - \gamma^{sl}}{\gamma^l} \qquad (1)$$

Therefore, according to the practical experience of the present inventors, if only the hydrophilic and hydrophobic design of the fabric yarn is performed, the ideal effect is often not obtainable. The reason is that the liquid water transmission capacities on the yarns of the surfaces, on the two surfaces of the fabric and on contention yarns between the two surfaces are all the factors that determines the water transport capacity of the final fabric. Based on the above novel considerations, one of the main elements of the present invention that differs from the prior art is that the present design methods is not limited to the wetting characteristics of the surface of the material, but is based on the capillary water transport capacity of the fabric.

The present invention starts from the following known theoretical foundations:

The liquid-air interface pressure difference of the capillary effect is the motive force for the fabric to transfer liquid water along the fiber surface, which is according to the Laplace equation

$$P = \sigma\left(\frac{1}{\rho_1} + \frac{1}{\rho_2}\right) \qquad (2)$$

where

P: additional pressure (Pa);
σ: liquid-air interfacial tension (N/m), being 0.0725 (N/m) for water at 20°C;
p1 represents the curvature radius (m) of the meniscus surface (m) in one axis,

p2 represents the curvature radius(m) of the meniscus surface in the other axis

When simplified into a round tube, the follow equation can be derived

$$P = \frac{2\sigma\cos\theta}{r} \tag{3}$$

where

r: capillary equivalent radius (m);
$\theta$: solid-liquid contact angle.

From formula (3), it can be obtained that, when the liquid and environmental conditions are known, the additional pressure forming a capillary effect is only related to the solid-liquid contact angle of the material and is inversely proportional to the capillary equivalent radius. The capillary effect can only rise or fall when the additional pressure acting on the capillary is greater than or equal to the gravity produced by the liquid water in the capillary.

Therefore, the maximum height of the liquid rising in the capillary is:

$$h \leq \frac{2\sigma\cos\theta}{rdg} \tag{4}$$

According to formula (4), it can be further pointed out that the height of the capillary effect is not only related to the hydrophobicity of the solid surface, but also inversely proportional to the equivalent radius of the capillary. In other words, the smaller the capillary equivalent radius, the greater the height that liquid water can reach in the capillary. When the contact angle of the capillary shows a hydrophilic property, the liquid level will rise in the capillary and vice versa. Thus, by calculating the value of h, we can predict the maximum water delivery height of the capillary, that is, the impact of the thickness of the fabric on liquid water transmission.

At the same time, according to Poiseuille' Law, when the capillary is in a horizontal position, although there is no potential energy difference in the external force field, it can automatically guide the liquid flow due to the additional pressure of the capillary:

$$q = \frac{r\pi^3\sigma cos\theta}{4\eta L} \tag{5}$$

where

q: capillary flow (m$^3$/s);
$\eta$: liquid viscosity (Pa.s);
L: capillary length (m).

Equation (5) shows that the liquid flow in the capillary is related to the contact angle between solid and liquid. The stronger the hydrophilicity and hydrophobicity, the stronger the capillary's transport capacity. The larger the capillary equivalent radius, the greater the transport capacity. At the same time, according to formula (5), the larger the capillary equivalent radius is, the smaller the height of the liquid rising on the capillary is, and macroscopically it shows the size of the wetting radius of the fabric and the diffusion speed of liquid water.

According to the technical specifications of the yarn, a person of ordinary skill in the art can easily obtain the equivalent radius of the yarn. Based on this, combined with practical experience, the present inventors developed a capillary equivalent radius calculation method for typical fiber bundles with different cross-sectional shapes. The results are summarized in Table 1. The capillary equivalent radius of atypical heterogeneous fiber bundles can be measured and calculated according to the standard FZ/T 50002 chemical fiber profile test method.

Table 1: Calculation Table of Capillary Equivalent Radius of Different Fiber Cross Sections

| Cross Section Shape | Capillary Equivalent Radius Estimated Value |
| --- | --- |
| Round shaped | 0.227R |
| Triangle shaped | 0.634R |
| H shaped | 0.431R |
| Y shaped | 0.237R |
| Cross shaped | 0.471 R |

For a yarn composed of multiple filaments (fibers), the present invention considers that there are two types of capillary formation mechanisms in a single yarn, one being that when the distance between the fibers and the fibers is close enough, the space between the fibers forms a capillary, just as a number of closely-bundled thin cylinders inserted into the water may form capillaries between their surfaces. Another mechanism is the formation of capillaries due to grooves on a single fiber. The formula for estimating the number of capillaries of a single yarn is given by:

$$n = \left( \frac{6}{7} + C X \right) F \qquad (6)$$

where

n: number of capillaries in a single yarn

C: empirical coefficient, representing the probability that grooves in heterogeneous cross-section fibers will form an effective capillary path. This coefficient is mainly related to the factors affecting the ideal fiber shape during the fiber and spinning process, and the mutual position and tightness between the fibers. According to the practical experience of the inventors, when the shape of the cross section of the yarn is clear and regular, the possibility of forming capillary channels is high; and when the mutual distance between twisted yarn fibers is reduced, a capillary effect will more easily occur. The effective capillary coefficient of the fiber in the yarn ranges from 0.95> = C> = 0.35, and the typically C = 0.8. In case of uncertainty, one may simply take the value 0.8 for approximate calculation. It means that about 80% of the grooves can form capillary channels.

X: number of grooves on the filament (fiber), for typical fibers such as round shape: X = 0; triangle shape: X = 0; Y shape: X = 3; H shape: X = 2; W shape: X = 3; cross shape: X = 4; C shape: X = 1.

F: Number of yarn filaments (fibers).

Extending formula (5) with (6), it can be obtained that for a yarn composed of n capillaries, and each capillary transporting q liquid , the total amount of liquid that the yarn can transport is:

$$LP = \frac{\left( \frac{6}{7} + C X \right) * F * r \pi^3 \sigma cos\theta}{4 \eta L} \qquad (7)$$

For further exploration, for the fabric containing an upper surface yarn and an bottom surface yarn (represented by the subscribes u and b, respectively), the unit area coverage of the upper surface yarn on the fabric's outer surface is Puu, and the unit area coverage of the upper surface yarn on the fabric's inner surface is Pbu. Similar, the unit area coverage of the bottom yarn on the fabric's outer surface is Pub, and the unit area coverage of the bottom yarn on the fabric's inner surface is Pbb. Then the ratio of the fabric liquid transportation capacity per unit area at two surfaces can be calculated by the following formula (8)

$$\frac{LP_u}{LP_b}=\frac{\left(\left(\frac{6}{7}+C_1X_u\right)*F_u*r_u\cos\theta_u\right)*P_{uu}+\left(\left(\frac{6}{7}+C_2X_b\right)*F_b*r_b\cos\theta_b\right)*P_{ub}}{\left\|\left(\left(\frac{6}{7}+C_2X_b\right)*F_b*r_b\cos\theta_b\right)*P_{bb}+\left(\left(\frac{6}{7}+C_1X_u\right)*F_u*r_u\cos\theta_u\right)*P_{bu}\right\|} \quad (8)$$

If the calculation based on the above formula results in a negative value, it means that the direction of capillary liquid water flow is opposite to what is intended, that is, that liquid water will flow from the cloth outer surface to the inner surface.

On the basis of the above theoretical consideration, the design goals of the differential moisture-conducting functional fabric according to the present invention are:

1. In line with the concept of environmental protection, fabrics with differential moisture-conducting properties can not only with different materials, but also fiber yarns of the same material. This is conducive to recycling after the fabric is used.

2. Make the outer surface of the fabric easy to wet , on which water spreads and evaporates quickly.

3. Make the inner surface of the fabric less easy to wet and water spread as little as possible and thus keep the dry feeling for the wearer.

4. Preserve proper liquid water transfer channels in the direction from the inner surface to the outer surface.

5. Have a differential moisture conductivity, i.e., the one-way transmission index (O) according to GB/T 21655.2, higher than level 3 or > = level 100.

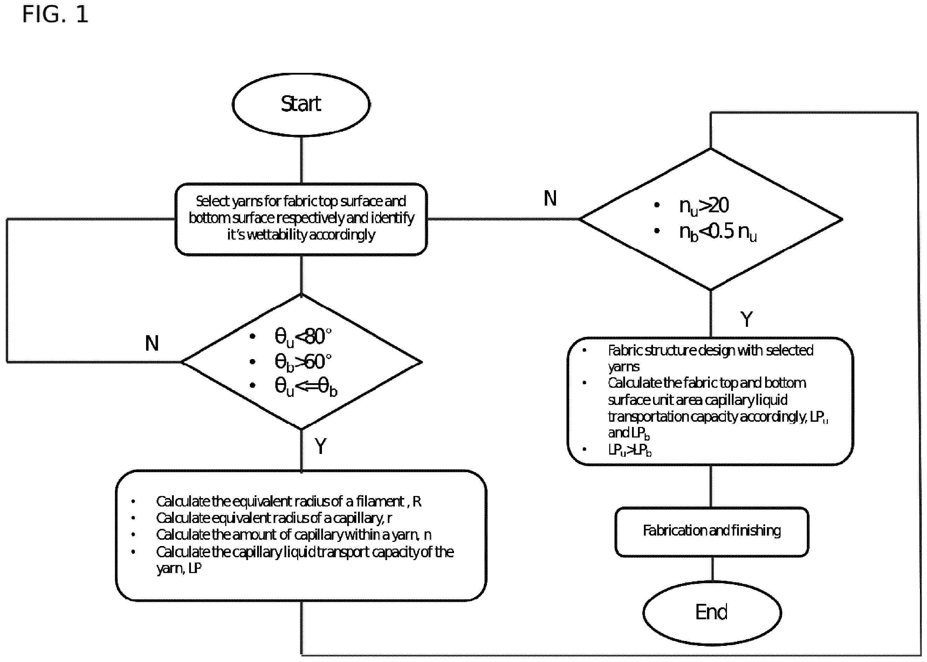

Therefore, the design goals according to the present invention are achieved by the implementation schemes provided herewith of which an examplary operation flow is presented in Figure 1. Accordingly, the design process according to the present invention starts with determination of the face/base yarns, and measurement of contact angles of the selected face and base yarns.

According to the design goals, the contact angle ($\theta_u$) of the face yarn is required to be $\theta_u <= 80°$, preferably $\theta_u <= 20°$ and he contact angle ($\theta_u$) of the base yarn to be $\theta_u <= \theta_b$. In other words, the face yarn has better wettability with the base yarn, or has the same wettability. If the wettability of the face yarn is found to be weaker than that of the base yarn after the measurement step, special attention needs to be paid to the calculation of the water permeability of the face yarn and the base yarn, as in such situations (base yarn having a large contact angle or stronger wettability) it is still theoretically possible to achieve differential water conductivity in the indirect from inner to outer surfaces of the resulting fabric.

It is well known in the art that when the conditions of the yarn material, the amount of filament and its fineness are known, the equivalent radius (R) of each filament can be easily estimated.

At the same time, according to Table 1 of the present invention, the capillary equivalent radius (r) formed in the fiber bundle composed of the fibers with different cross-sectional shapes can be converted.

According to formula (6), the total number of capillaries in a single yarn (n) can be estimated.

The capability to transport liquid via capillary effect of the yarn (LP) can be estimated according to formula (7).

In order to achieve the design goal according to the present invention, it is required that a capillary equivalent radius ($r_u$) <= 4.5 ($\mu$m), preferably a capillary equivalent radius ($r_u$) <= 2.75 ($\mu$m), and a total capillary ($n_u$) >= 20, preferably $n_u$ >= 50 .

In order to reduce the diffusion radius of liquid water on the fabric inner surface, the total number of capillary tubes ($n_b$) of the single base yarn is less than or equal to the total number of capillary tubes ($n_u$) of the single face yarn, i.e., $n_b <= n_u$, preferably the total number of capillary tubes of the face yarn is more than 2 times that of the base yarn, i.e., $n_u >= 2n_b$.

In order to establish a more significant difference in water conductivity accordingly to the present invention, the unit coverage area of the face yarn and the base yarn on each sides of the fabric is to be adjusted through the design of the fabric structure based on the calculations developed in the present invention that predict the effect of differential water conductivity in fabrics.

In order to achieve a significant difference in water conductivity, the design requires that the ratio between the capillary water transport capacity ($LP_{uy}$) of the face yarn and the capillary water transport capacity ($LP_{by}$) of the base yarn be equal or greater than 1.2, or $LP_{uy}$: $LP_{by}$ >=2.0, preferably $LP_{uy}$: $LP_{by}$ >= 2.0, and the ratio between the capillary water transport capacity per unit area of fabric base ($LP_u$) and the capillary water transport capacity ($LP_b$) per unit area of fabric face is > 1.3, preferably $LP_u$: $LP_b$ >= 2.0.

According to the empiric estimates, it is recommended that the face yarn covers 10-45%, preferably 25-45% of the fabric base surface area (i.e., inner surface) to form a liquid water transmission channel in the fabric structure in order to achieve a significantly differential water-conducting ability for the designed fabric. Thus, in the design practice, it is necessary to pay attention to the structures of the fabric face and base. From the same materials, choosing differently structured fabric face and base may result in two different results. When a drop of water falls on the fabric base surface, one result would be that most of the liquid water is transferred the base to the face, and the other result would be that the water is more difficult to pass outward, and most of it is retained at the base surface of the fabric.

## BRIEF DESCRIPTION OF THE DRAWINGS

FIG. 1 is a flowchart of a method for designing and making a differential water-conducting fabric based on yarn capillary water transport capacity (LP) according to the present invention;

FIG. 2 is a structure diagram of a pure polyester double-sided knitted fabric;

FIG. 3 shows the measurement curve of the water content difference on the two surfaces of the fabric of Example 1;

FIG. 4 shows the measurement curve of the water content difference on the two surfaces of the fabric in Example 2;

FIG. 5 shows the measurement curve of the water content difference on the two surfaces of the fabric in Example 3;

FIG. 6 is a structure diagram of a polyester and nylon double-sided knitted fabric;

FIG. 7 shows the measurement curve of the water content difference on the two surfaces of the fabric in Example 4;

FIG. 8 shows the measurement curve of the water content difference on the two surfaces of the fabric in Example 5.

## DETAILED DESCRIPTION OF THE INVENTION WITH EMBODIMENTS

Example 1: Design of pure polyester knitted fabric with double-sided structure (1).

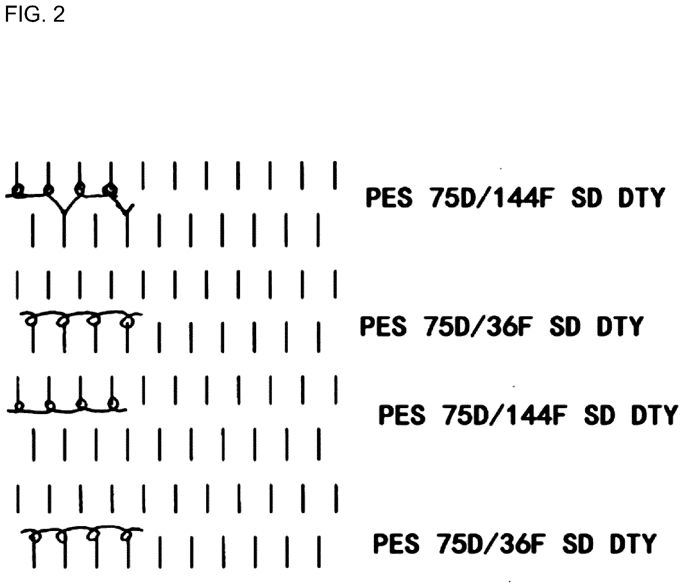

The fabric uses ordinary polyester, and its cross section is circular. The base yarn is made of ordinary round cross section polyester 75D/36F; the face yarn is made of ordinary round cross section polyester 75D/144F; the structure design of the fabric is shown in FIG. 2, where the double-knit fabric is connected with tucks.

A plane consisting of the yarn is formed by closely winding the yarn on a microscope slide, and then water is dripped on the plane using a contact angle measuring instrument, and the contact angle thereof is measured. In this example, the contact angle of the face yarn (PES 75D/144F) is 56 °, and the contact angle of the base yarn (PES 75D/36F) is 62 °. It is well known in the art that the density of polyester is 1,360,000g/$m^3$. Accordingly:

the base yarn polyester monofilament has an equivalent radius of

$$R_b = \sqrt{\frac{75}{9000 * 36 * \pi * 1360000}} = 7.36\,(\mu m)$$

Capillary equivalent radius $r_b = 0.227 R_b = 1.67\,(\mu m)$

According to the above formula (6), the total capillaries of the round 75D/36F polyester single yarn.

$$n_b = \left(\frac{6}{7} + 0.8 * 0\right) * 36 = 30.8$$

Similarly, for face yarn 75D/144F polyester:
Monofilament equivalent radius is

$$R_u = \sqrt{\frac{75}{9000 * 144 * \pi * 1360000}} = 3.68 \left(\mu m\right)$$

$$n_u = \left(\frac{6}{7} + 0.8 * 0\right) * 144 = 123.4$$

Capillary equivalent radius $r_u$ = 0.227 $R_u$ = 0.84 ($\mu$m)
$r_b$: $r_u$ = 1.67: 0.84 = 2.0
$n_b$: $n_u$ = 30.8:123.4 = 0.25
It is known that the $\theta$ angle of face polyester is 56 and cos (56) = 0.5592; the $\theta$ angle of base yarn polyester is 62 and cos (62) = 0.4695.
According to the fabric structure of FIG. 2, a loop is deemed as two units and a tuck deemed as one unit, and accordingly:
$P_{uu}$ = 1, $P_{ub}$= 0; $P_{bu}$ = 1/9, $P_{bb}$ = 8/9.
According to formula 8

$$\frac{LP_u}{LP_b} = \frac{\left(\left(\frac{6}{7} + C_1 X_u\right) * F_u * r_u \cos\theta_u\right) * P_{uu} + \left(\left(\frac{6}{7} + C_2 X_b\right) * F_b * r_b \cos\theta_b\right) * P_{ub}}{\left|\left(\left(\frac{6}{7} + C_2 X_b\right) * F_b * r_b \cos\theta_b\right) * P_{bb} + \left(\left(\frac{6}{7} + C_1 X_u\right) * F_u * r_u \cos\theta_u\right) * P_{bu}\right|} = 2.07$$

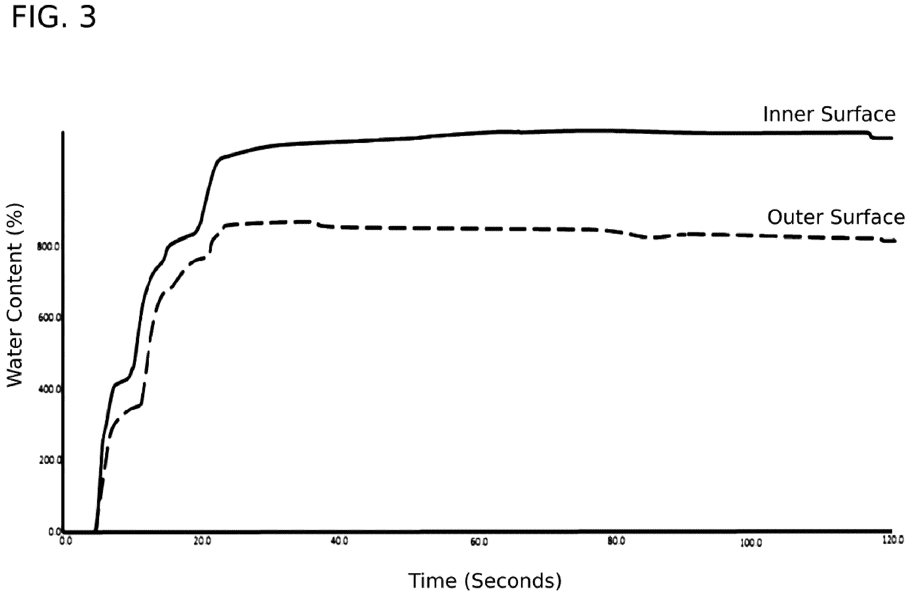

The pure polyester differential moisture-permeable fabric designed and produced in the examples of the present invention was measured in accordance with the standard AATCC 195 "Liquid Moisture Management Properties of Textile Fabrics". The difference in moisture content between the two surfaces of the fabric over time is shown in FIG.3. It is verified that the fabric have a differentiated moisture transfer ability when $LP_u$> $LP_b$, and that the one-way transport capability of the fabric measured in this instance is 234. The results show that through the selection of the yarn structure and the design of the fabric structure, the same material yarn with similar wetting characteristics of the material can also achieve the differential moisture transfer ability on the two sides of the fabric.

Table 2: Test results of FIG. 3

|  | Outer Surface | Inner Surface |
|---|---|---|
| Wetting Time (second) | 3.937 | 3.843 |
| Absorption Rate (%/s) | 39.5566 | 40.861 |
| Maximum Wetting Radius (mm) | 15.0 | 15.0 |
| Extension Speed (mm/s) | 2.482 | 2.7261 |
| One-way Transport Index (%) | 234.1792 |  |

Example 2: Design of pure polyester knitted fabric with double-sided structure (2).

Continuing on the basis of Example 1, the face yarn (PES 75D/144F) in Example 1 was subjected to the wicking finishing to change its wetting characteristics. The wicking finishing was carried out on the face yarn via the process of cheese dyeing. The basic operation of cheese dyeing is a process of loose tube-cage-dyeing-drying-rewinding. In this example, however, the dye liquor was replaced with a moisture-wicking finishing aid. Polyester's moisture wicking additive, MST, was from Hangzhou Done Textile Technology Co., Ltd. and the amount used was 30 g / liter. The operation was conducted according to the conventional package yarn dyeing process for processing and drying. The drying temperature was 110°C. The wetting characteristics of the treated yarn were measured according to the method described in Example 1, and the contact angle of the face yarn was 10°. cos (10) = 0.9848.

The base yarn (PES 75D/36F) in Example 1 was still used, with a contact angle of 62°, cos (62) = 0.4695, and the same fabric structure and manufacturing process were used as in Example 1.

$$\frac{LP_u}{LP_b} = 3.10$$

Calculated according to formula (8)

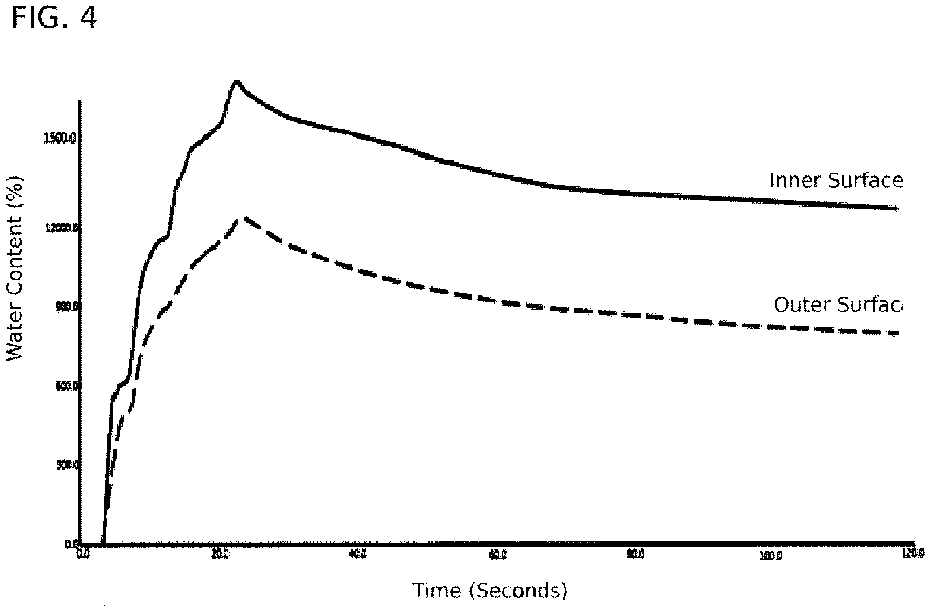

The pure polyester differential moisture-permeable fabric designed and produced in Example 2 was measured according to the standard AATCC 195 "Liquid Moisture Management Properties of Textile Fabrics". The variation of the moisture content of the two surfaces of the fabric over time is shown in FIG. 4, and the one-way transport capability of the fabric measured in this example is 394.

Table 3: Test results of FIG. 4

|  | Outer Surface | Inner Surface |
|---|---|---|
| Wetting Time (second) | 2.995 | 2.716 |
| Absorption Rate (%/s) | 52.9502 | 75.9777 |
| Maximum Wetting Radius (mm) | 25.0 | 30.0 |
| Extension Speed (mm/s) | 4.6781 | 5.2392 |
| One-way Transport Index (%) | 394.8683 | |

Example 3: Design of pure polyester knitted fabric with double-sided structure (3).

Continuing on the basis of Example 2, the base yarn (PES 75D/36F) in Example 1 was subject to a water-repellent finishing to change its wetting characteristics. The repellent finishing was performed by the the process of cheese dyeing as described in Example 2. In this example, the dye liquor was replaced with a water repellent finishing aid. The polyester water-repellent finishing additive is SMARTREPEL HYDRO AM produced by Archroma Company. The amount used was 60 g/L. It is processed and dried according to conventional cheese dyeing process. The drying temperature was 110°C, and the curing temperature/time was 170°C/30S. The wetting characteristics of the treated yarn were measured according to the method described in Example 1, and the contact angle of the ground yarn was 135°. cos (135) =-0.7071.

The face yarn (PES 75D/144F) in Example 1 was still used, with a contact angle of 10°, cos (10) = 0.9848, and the same structure and process were used as in Example 1.

$$\frac{LP_u}{LP_b} = 4.81$$

Calculated according to formula (8)

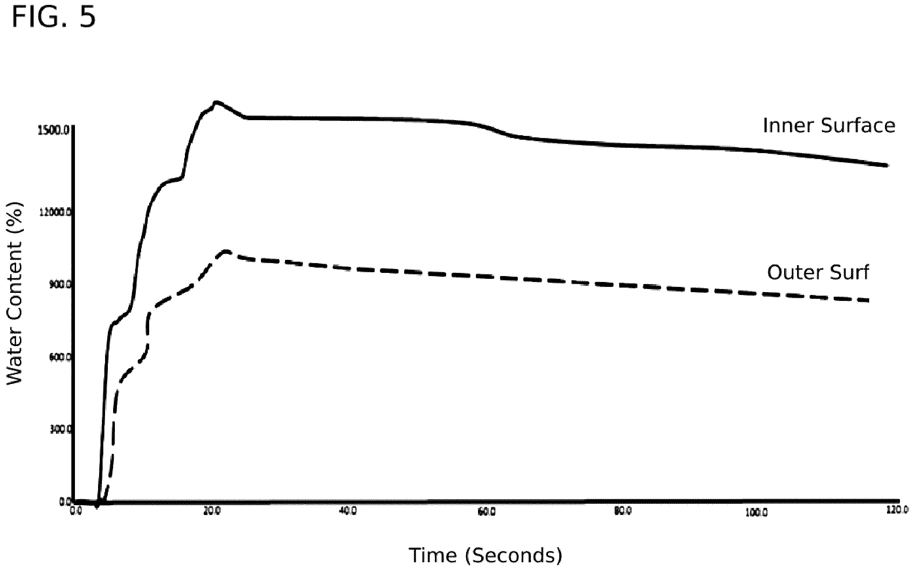

The pure polyester differential moisture-conducting fabric designed and produced in Example 3 was measured according to the standard AATCC 195 "Liquid Moisture Management Properties of Textile Fabrics". The variation of the water content of the two surfaces of the fabric with time is shown in FIG. 5, and the one-way transport capability of the fabric measured in ths example is 532.

Table 4: Test results of FIG. 5

|  | Outer Surface | Inner Surface |
|---|---|---|
| Wetting Time (second) | 3.931 | 2.902 |
| Absorption Rate (%/s) | 52.883 | 81.476 |
| Maximum Wetting Radius (mm) | 20.0 | 20.0 |
| Extension Speed (mm/s) | 3.221 | 3.8519 |

(continued)

|  | Outer Surface | Inner Surface |
|---|---|---|
| One-way Transport Index (%) | 532.2259 | |

Example 4: Polyester and nylon double layer knitted fabric (1)

From Example 1, the material and structure were changed to design a double-sided structure polyester and nylon knitted fabric.

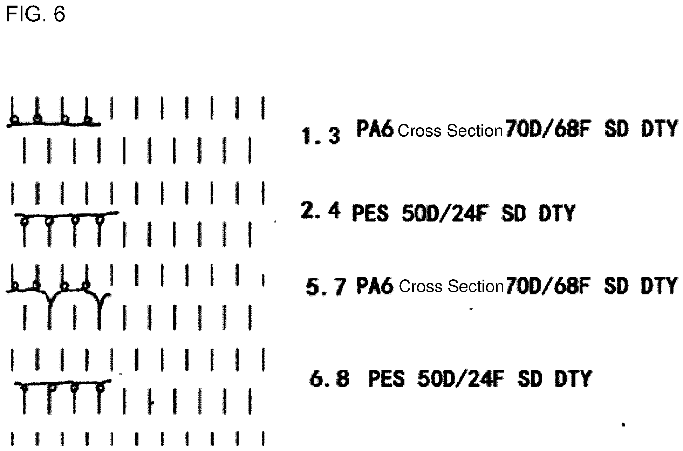

The fabric is made up of ordinary round section polyester yarn 50D/24F as base yarn, a cross shaped nylon yarn 70D/68F as the face yarn , and connected by the tuck structure. The double-sided structure is as shown FIG. 6.

The contact angle of the face yarn (PA6 70D/68F) was measured as described as in Example 1, and the contact angle of the base yarn (PES 50D/24F) was 63°. It is well known in the art that the density of polyester is 1,360,000 $g/m^3$, and the density of nylon is 1150000 $g/m^3$.

Accordingly, 50D/24F polyester monofilament equivalent radius

$$R_b = \sqrt{\frac{50}{9000*24*\pi*1360000}} = 7.36(\mu m)$$

Capillary equivalent radius $r_b = 0.227R_b = 1.67\mu m$

According to formula (6), the total capillary of round 50D / 24F polyester single yarn is calculated:

$$n_b = (6/7 + 0.8 * 0) * 24 = 20.6$$

Similarly, for nylon 70D/68F cross-shaped yarn, Monofilament equivalent radius is:

$$Ru = \sqrt{\frac{70}{9000*68*\pi*1150000}} = 5.63(\mu m)$$
$$r_u = 0.471R_u = 2.65\mu m$$

Total capillary of single yarn $n_u = (6/7 + 0.8*4) *68 = 275.89$

$n_u : n_b = 276 : 20.6 = 13.39$

$r_b : r_u = 11.67 : 2.65 = 0.63$

The base polyester $\theta$ angle is known to be 63, cos (63) = 0.453, and the face nylon yarn $\theta$ angle to be 40, cos (40) = 0.766

According to the structure of the fabric, a loop is deemed as two units and a tuck is deemed as one unit. Therefore, $P_{uu} = 1$, $P_{bu} = 1/9$, and $P_{bb} = 8/9$.

According to formula 8

$$L_{Pu} / L_{Pb} = 7.31$$

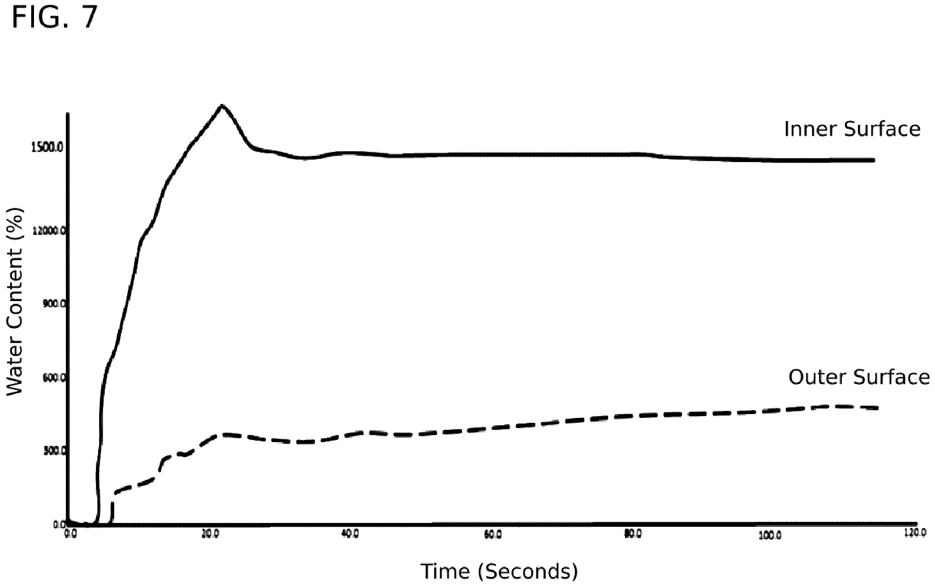

The polyester and nylon differential moisture-conducting fabrics designed and produced in Example 4 were measured according to the standard AATCC 195 "Liquid Moisture Management Properties of Textile Fabrics". The variation of the water content of the two surfaces of the fabric with time is shown in FIG. 7, and the one-way transport capability of the fabric measured in this example is 948.

Table 5: Test results of FIG. 7

|  | Outer Surface | Inner Surface |
|---|---|---|
| Wetting Time (second) | 5.335 | 3.463 |
| Absorption Rate (%/s) | 18.6875 | 78.6318 |
| Maximum Wetting Radius (mm) | 15.0 | 25.0 |
| Extension Speed (mm/s) | 2.4781 | 4.7851 |
| One-way Transport Index (%) | 948.9071 |  |

Example 5: Polyester and nylon double layer knitted fabric (2)

The characteristics of the base yarn were changed from Example 4. The ordinary round polyester yarn 50D/24F was replaced with 75D/48F. The face yarn was still the cross shaped nylon yarn 70D/68F. with the loop connection, the fabric structure remains the same as the structure of Example 4.

The base yarn 75D/48F polyester monofilament equivalent radius

$$R_b = \sqrt{\frac{75}{9000 * 48 * \pi * 1360000}} = 6.37 \, (\mu m)$$

Capillary equivalent radius $r_b = 0.227 R_b = 1.45 \mu m$

Total capillary of single yarn $n_b = (+ 0.8 * 0) * 48 = 41.14$

As in Examples 1 and 4, it is known that the polyester yarn's contact angle is 63, cos (63) = 0.453, a face nylon yarn's contact angle of 40, and cos (40) = 0.766. According to the structure of the fabric, a loop is deemed as two units and a tuck is deemed as one unit. Accordingly, $P_{uu} = 1$, $P_{bu} = 1/9$, and $P_{bb} = 8/9$.

According to formula 8

$$L_{Pu} / L_{Pb} = 6.43$$

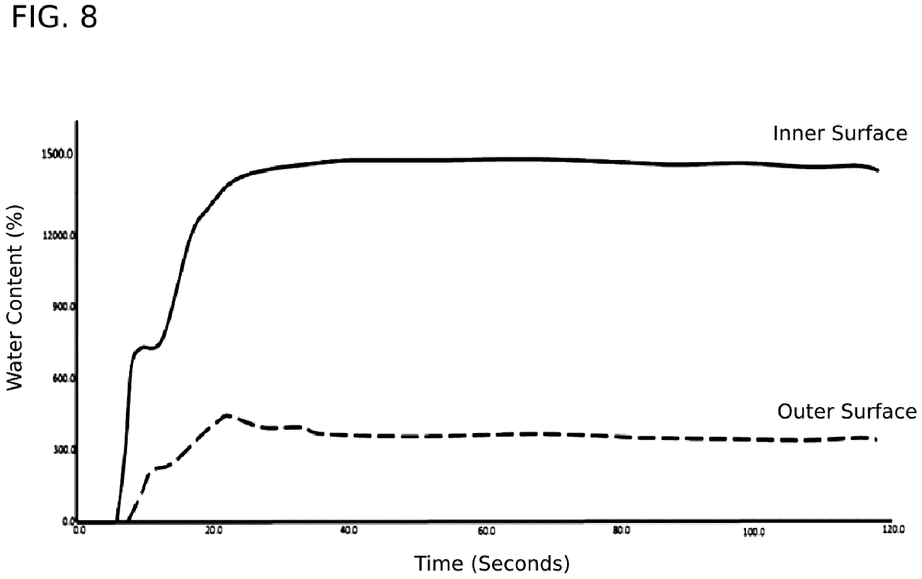

The polyester and nylon differential moisture-conducting fabrics designed and produced in Example 5 were measured according to the standard AATCC 195 "Liquid Moisture Management Properties of Textile Fabrics". The variation of the water content of the two surfaces of the fabric with time is shown in FIG. 8, and the one-way transport capability of the fabric measured in this instance is 776.

Table 6: Test results of Figure 8

|  | Outer Surface | Inner Surface |
|---|---|---|
| Wetting Time (second) | 6.666 | 5.062 |
| Absorption Rate (%/s) | 21.1527 | 43.7819 |
| Maximum Wetting Radius (mm) | 10.0 | 15.0 |
| Extension Speed (mm/s) | 1.4324 | 2.2636 |
| One-way Transport Index (%) | 775.494 |  |

From the above examples, it can be concluded that the difference in capillary water conductivity per unit area of fabric is a decisive factor on the differential moisture conductivity of the two sides of the fabric. The capillary water conductivity per unit area of the fabric surface is affected by wetting characteristics of the material, the capillary characteristics of the yarn, and the structure of the fabric. The examples also confirms that under the same structural conditions, the greater the difference in wetting characteristics of the fabric on the two sides, the greater the fabric's differential water conductivity; the greater the difference in the number of capillary tubes on the fabric's two sides, the greater the difference in water conductivity on its two sides. By calculating the capillary liquid transportation at the two surfaces of the fabric, combined with the measurement and selection of the wetting characteristics of the yarn(s) and the variation of the fabric structure, the design of the differential liquid transportation fabric can be realized. The fabric produced according to the present design method can be a pure material, requiring no additional chemicals, which will benefit for producing greener functional textiles and for easier recycling.

**Claims**

1. A method for making a fabric with different capillary water transport capabilities on outer surface and inner surface, comprising calculating capillary water conductivity of (a) a single yarn, (b) inner surface of the fabric, and (c) outer surface of the fabric, and adjusting the fabric's structure, based on based the calculation results, to result in a calculated capillary water conductivity of the outer surface at least 1.3 times greater than the calculated capillary water conductivity of the inner surface.

2. The method according to claim 1, wherein the calculated capillary water conductivity of the outer surface is at least 2 times greater than that of the inner surface.

3. The method according to claim 1 or 2, wherein the calculation of capillary water conductivity of a single yarn comprises: measuring the contact angle $\theta$ of the yarn to determine the gas-liquid-solid three-phase wetting characteristics of the material; then calculating capillary equivalent radius r of the yarn, number of capillaries, and capillary water conductivity LP; and finally, obtaining the capillary water delivery capacity according to the following formula:

$$LP = \frac{\left(\frac{6}{7} + C\,X\right) * F * r\,\pi^3\,\sigma cos\theta}{4\,\eta L}$$

wherein,
LP: capillary water conductivity of the yarn (m $^3$/s);
C: effective capillary coefficient of the filament in the yarn, generally 0.95> = C> = 0.35, typical C = 0.8;
X: number of grooves on the filament, typically round filament X = 0; triangle-shaped filament X = 0; Y-shaped filament X = 3; H-shaped filament X = 2; W-shaped filament X = 3; cross-shaped filament X = 4; C shaped filament X = 1; F: number of filaments in a single yarn;
r: capillary equivalent radius (m);
$\sigma$: liquid-gas interfacial tension (N/m), 0.0725 (N/m) at 20 ° C for water;
$\eta$: viscosity of the liquid (Pa.s); and
L: length of the capillary (m).

4. The method according to claim 3, wherein the contact angle of the yarn of the outer surface is not greater than 80°; the capillary equivalent radius is not greater than 4.5 ($\mu$m); and the total capillary is not less than 20.

5. The method according to claim 4, wherein the contact angle of the yarn of the outer surface is not larger than 20°; the capillary equivalent radius is not greater than 2.75 ($\mu$m); and the total capillary number is not smaller than 50.

6. The method according to claim 1 or 2, wherein the contact angle of the yarn of the inner surface is not less than 60° and the total number of capillaries is equal to or less than the total number of capillaries of the yarn of the outer surface.

7. The method according to claim 6, wherein the contact angle of the yarn of the inner surface is not less than 125° and the total number of capillaries is less than or equal to half of the total number of capillaries of the yarn of the outer surface.

8. The method according to claim 1 or 2, wherein the ratio of the capillary water carrying capacity of the surface yarn to the capillary water carrying capacity of the bottom yarn is greater than 1.0.

9. The method according to claim 1 or 2, wherein the ratio of the capillary water conductivity of the yarn of the outer surface to the capillary water conductivity of the yarn of the inner surface is greater than 2.0.

10. The method according to claim 1 or 2, wherein the ratio of capillary water conductivity $LP_u$ per unit area of the outer surface :capillary water conductivity $LP_b$ per unit area of the inner surface is calculated according to the following formula:

$$\frac{LP_u}{LP_b} = \frac{\left(\left(\frac{6}{7}+C_1 X_u\right)*F_u*r_u\cos\theta_u\right)*P_{uu}+\left(\left(\frac{6}{7}+C_2 X_b\right)*F_b*r_b\cos\theta_b\right)*P_{ub}}{\left\|\left(\left(\frac{6}{7}+C_2 X_b\right)*F_b*r_b\cos\theta_b\right)*P_{bb}+\left(\left(\frac{6}{7}+C_1 X_u\right)*F_u*r_u\cos\theta_u\right)*P_{bu}\right\|}$$

wherein,
$P_{uu}$: unit area coverage of the face yarn on the outer surface;
$P_{bu}$: unit area coverage of the face yarn on the inner surface;
$P_{ub}$: unit area coverage of the base yarn on the outer surface; and
$P_{bb}$: unit area coverage of the base yarn on the inner surface.

11. The method according to the method of claim 1 or 2, the yarn for the outer surface and the yarn for the inner surface can be made of yarns of the same material and produce a two-sided differentiated water-permeable functional fabric of the same material without any chemical finishing.

EP 3 854 580 A1

FIG. 1

Start

Select yarns for fabric top surface and bottom surface respectively and identify it's wettability accordingly

N

- $n_u > 20$
- $n_b < 0.5\, n_u$

N

- $\theta_u < 80°$
- $\theta_b > 60°$
- $\theta_u <= \theta_b$

Y

- Fabric structure design with selected yarns
- Calculate the fabric top and bottom surface unit area capillary liquid transportation capacity accordingly, $LP_u$ and $LP_b$
- $LP_u > LP_b$

Y

- Calculate the equivalent radius of a filament, R
- Calculate equivalent radius of a capillary, r
- Calculate the amount of capillary within a yarn, n
- Calculate the capillary liquid transport capacity of the yarn, LP

Fabrication and finishing

End

FIG. 2

PES 75D/144F SD DTY

PES 75D/36F SD DTY

PES 75D/144F SD DTY

PES 75D/36F SD DTY

# FIG. 3

Inner Surface

Outer Surface

Water Content (%)

Time (Seconds)

FIG. 4

FIG. 5

FIG. 6

1. 3 PA6 Cross Section 70D/68F SD DTY

2. 4 PES 50D/24F SD DTY

5. 7 PA6 Cross Section 70D/68F SD DTY

6. 8 PES 50D/24F SD DTY

# FIG. 7

FIG. 8

Water Content (%)

Time (Seconds)

Inner Surface

Outer Surface

## INTERNATIONAL SEARCH REPORT

| International application No. |
|---|
| **PCT/CN2018/121257** |

**A.   CLASSIFICATION OF SUBJECT MATTER**

B32B 5/26(2006.01)i; B32B 5/22(2006.01)i; D03D 11/00(2006.01)i; D03D 15/00(2006.01)i; D01D 5/253(2006.01)i

According to International Patent Classification (IPC) or to both national classification and IPC

**B.   FIELDS SEARCHED**

Minimum documentation searched (classification system followed by classification symbols)

B32B5; D03D11; D03D15; D01D5

Documentation searched other than minimum documentation to the extent that such documents are included in the fields searched

Electronic data base consulted during the international search (name of data base and, where practicable, search terms used)

CNABS; CNTXT; DWPI; SIPOABS; CNKI; USTXT; EPTXT; JPTXT; WOTXT; ISI Web of Knowledge; 万方, WANFANG; 超星, SUPERSTAR: 织物, 纤维, 面料, 布料, 速干, 快干, 排汗, 排湿, 导湿, 毛细, 接触角, 异型, 截面, 沟, 槽, 模型, fabric, textile, fiber, fibre, laminate, garment, capillary, quick drying, moisture conductivity, perspir+, contact angle, poiseuille

**C.   DOCUMENTS CONSIDERED TO BE RELEVANT**

| Category* | Citation of document, with indication, where appropriate, of the relevant passages | Relevant to claim No. |
|---|---|---|
| X | 王其 等 (WANG, Qi et al.). "织物差动毛细效应模型及应用 (Differential Capillary Effect Model of Fabric and Application)" <br> 东华大学学报（自然科学版）*(Journal of Donghua University (Natural Science))*, <br> Vol. 27, No. 3, 15 June 2001 (2001-06-15), <br> ISSN: 1671-0444, <br>     pp. 54-57, sections 1, 3 and 6 | 1, 2, 6-9, 11 |
| A | CN 204540933 U (FUJIAN SEVEN BRAND GROUP CO., LTD.) 12 August 2015 (2015-08-12) <br>     entire document | 1-11 |
| A | CN 2839315 Y (WANG, QIMING) 22 November 2006 (2006-11-22) <br>     entire document | 1-11 |
| A | JP S6490742 A (TOOMASU ERU SHII TANGU) 07 April 1989 (1989-04-07) <br>     entire document | 1-11 |

☐ Further documents are listed in the continuation of Box C.        ☑ See patent family annex.

| | |
|---|---|
| *     Special categories of cited documents: <br> "A"   document defining the general state of the art which is not considered to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **10 April 2019** | **10 May 2019** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2018/121257**

| Patent document cited in search report | | | Publication date (day/month/year) | Patent family member(s) | Publication date (day/month/year) |
|---|---|---|---|---|---|
| CN | 204540933 | U | 12 August 2015 | None | |
| CN | 2839315 | Y | 22 November 2006 | None | |
| JP | S6490742 | A | 07 April 1989 | None | |

Form PCT/ISA/210 (patent family annex) (January 2015)

## REFERENCES CITED IN THE DESCRIPTION

**Patent documents cited in the description**

- CN 105725319 A
- CN 106283368 A
- CN 205741455 U
- CN 105088802 A
- CN 103276601 A
- CN 201710717764
- CN 106012538 A
- CN 1985036 A
- CN 207044828 U
- CN 206033999 U

**Non-patent literature cited in the description**

- **YAO MU et al.** Theoretical and Practical Research on Wet Conduction of Fabrics. *Journal of Northwest Textile Institute of Technology,* vol. 15 (2